# EUROPÄISCHE PATENTANMELDUNG

(11) **EP 1 709 939 A1**
(43) Veröffentlichungstag der Anmeldung: **11.10.2006**
(21) Anmeldenummer: 05405284.0
(22) Anmeldetag: 08.04.2005
(51) Int. Cl.: A61C 13/265

(54) **Extrakoronales Geschiebe sowie Verfahren zum Herstellen desselben**

(71) Anmelder: Cendres & Metaux SA, 2501 Biel (CH)
(72) Erfinder: Auderset, Adrian, 2502 Biel (CH); Studer, Jean-Fred, 2516 Lamboing (CH); Strazza, Mathias, 2560 Nidau (CH)
(74) Vertreter: AMMANN PATENTANWÄLTE AG BERN

(57) **Zusammenfassung**

Das extrakoronale Geschiebe umfasst eine mit einer mit dem zahnersatzteil zu verbindende Matrize (65) und eine mit einer am natürlichen Zahn oder Implantat befestigbare Patrize, welche ein Approximalteil (51) umfasst. Das Approximalteil umfasst an zwei gegenüberliegenden Längsseiten jeweils mindestens eine Längsrille (20) oder Längsrippe, in welche eine entsprechende Längsrippe (30) bzw. Längsrille der Matrize greift zur Bildung einer formschlüssigen Verbindung, und mindestens eine okklusal zugewandte Auflagefläche, auf welcher die Matrize mit einer Stützfläche aufliegt.

## Beschreibung

Die vorliegende Erfindung bezieht sich auf ein extrakoronales Geschiebe gemäss Oberbegriff des Patentanspruchs 1 und ein Verfahren zum Herstellen eines derartigen Geschiebes.

Es sind vielfältige Geschiebe bekannt, wobei in der Regel zwischen intrakoronalen Geschieben, bei welchen die Patrize im natürlichen Zahn oder Implantat verankert ist, und extrakoronalen Geschieben, bei welchen - wie in der vorliegenden Anmeldung - die Patrize am natürlichen Zahn oder Implantat befestigt ist. Extrakoronale Geschiebe der eingangs erwähnten Art sind beispielsweise aus den Patentschriften des gleichen Anmelders EP 0 298 909 B1 sowie EP 0 659 063 B1 bekannt. Diese Geschiebe haben u.a. den Vorteil, dass sie keinen Stabilisator benötigen, der über einen Überguss, auch Umlauf genannt, mit dem Geschiebeteil verbunden ist. Jedoch können allzu hohe Belastungen des Geschiebes zu unerwünschten Relativbewegungen zwischen Zahnkrone bzw. Implantat und Zahnprothese oder schlimmstenfalls sogar zum Bruch der Patrize führen.

Aus der Patentanmeldung DE 196 19 786 A1 ist ein weiteres Geschiebe der eingangs erwähnten Art bekannt, bei welchem Patrize und Matrize verdrehungsfest zusammensteckbar und verriegelbar sind. Zum Auffangen von Rotationsbewegungen umfasst die Zahnprothese einen bügelartig geformten Schubverteilungsarm als Bestandteil einer skelettartigen versteifung. Der Schubverteilungsarm greift in eine v-förmig ausgebildete Rastnut. Die Rastnut ist relativ schwierig herstellbar und erschwert eine reproduzierbare Fertigung im industriellen Massstab. Im Weiteren ergibt sich durch das Vorsehen eines zusätzlichen Schubverteilungsarms ein relativ komplizierter Aufbau, der zu einer aufwändigen und teuren Herstellung der Zahnprothese führt.

Ausgehend von diesem Stand der Technik liegt eine Aufgabe der vorliegenden Erfindung darin, die erwähnten Nachteile zu beseitigen und das Geschiebe der eingangs erwähnten Art so zu verbessern, dass es belastbarer ist, ohne dass ein zusätzlicher Schubverteilungsarm erforderlich ist.

Ein Geschiebe, welches diese Aufgabe löst, ist im Anspruch 1 angegeben. Die weiteren Ansprüche geben bevorzugte Ausführungen an sowie ein Verfahren zum Herstellen eines erfindungsgemässen Geschiebes.

Die Erfindung wird im Folgenden anhand von bevorzugten Ausführungsbeispielen unter Bezugnahme auf Figuren erläutert. Es zeigen
Fig. 1 eine Draufsicht einer Patrize gemäss einem ersten Ausführungsbeispiel des erfindungsgemässen Geschiebes;
Fig. 2 eine Seitenansicht der Patrize gemäss Figur 1;
Fig. 3 eine Vorderansicht einer Matrize gemäss dem ersten Ausführungsbeispiel des erfindungsgemässen Geschiebes;
Fig. 4 eine Seitenansicht der Matrize gemäss Figur 3;
Fig. 5 eine perspektivische Ansicht der Matrize gemäss Figur 3 von der basalen Seite her;
Fig. 6 eine Draufsicht eines Friktionsteils gemäss dem ersten Ausführungsbeispiel des erfindungsgemässen Geschiebes;
Fig. 7 eine Seitenansicht des Friktionsteils gemäss Figur 6;
Fig. 8 eine perspektivische Ansicht des Friktionsteils gemäss Figur 6 von oben;
Fig. 9 einen Schnitt des zusammengefügten Geschiebes gemäss dem ersten Ausführungsbeispiel in der Ebene IX-IX;
Fig. 10 eine perspektivische, teilweise geschnittene Ansicht des zusammengefügten Geschiebes gemäss dem ersten Ausführungsbeispiel;
Fig. 11 eine Draufsicht einer Patrize gemäss einem zweiten Ausführungsbeispiel des erfindungsgemässen Geschiebes;
Fig. 12 eine perspektivische Ansicht der Patrize gemäss Figur 11;
Fig. 13 eine Draufsicht einer Patrize gemäss einem dritten Ausführungsbeispiel des erfindungsgemässen Geschiebes;
Fig. 14 eine perspektivische Ansicht der Patrize gemäss Figur 13;
Fig. 15 eine Draufsicht einer Patrize gemäss einem vierten Ausführungsbeispiel des erfindungsgemässen Geschiebes;
Fig. 16 eine Seitenansicht der Patrize gemäss Figur 15;
Fig. 17 eine Vorderansicht der Patrize gemäss Figur 15;
Fig. 18 eine perspektivische Ansicht der Patrize gemäss Figur 15;
Fig. 19 eine Ansicht der Matrize von unten gemäss dem vierten Ausführungsbeispiel des erfindungsgemässen Geschiebes;
Fig. 20 eine Vorderansicht der Matrize gemäss Figur 19;
Fig. 21 eine Seitenansicht der Matrize gemäss Figur 19;
Fig. 22 eine perspektivische Ansicht der Matrize gemäss Figur 19 von der basalen Seite her;
Fig. 23 eine perspektivische Ansicht der Matrize gemäss Figur 19 von oben;
Fig. 24 eine Draufsicht des Friktionsteils gemäss dem vierten Ausführungsbeispiel des erfindungsgemässen Geschiebes;
Fig. 25 eine Seitenansicht des Friktionsteils gemäss Figur 24;
Fig. 26 eine Vorderansicht des Friktionsteils gemäss Figur 24;
Fig. 27 eine perspektivische Ansicht des Friktionsteils gemäss Figur 24 von oben;
Fig. 28 eine perspektivische Ansicht des Friktionsteils gemäss Figur 24 von der basalen Seite her;
Fig. 29 eine perspektivische, teilweise geschnittene Ansicht des zusammengefügten Geschiebes gemäss dem vierten Ausführungsbeispiel;
Fig. 30 eine Seitenansicht der Patrize gemäss einem fünften Ausführungsbeispiel des erfindungsgemässen Geschiebes;
Fig. 31 eine geschnittene Seitenansicht der Patrize gemäss Figur 30;
Fig. 32 eine Draufsicht der Patrize gemäss Figur 30;
Fig. 33 eine perspektivische Ansicht der Patrize gemäss Figur 30;
Fig. 34 eine Seitenansicht eines Implantats mit Patrize gemäss Figur 30;
Fig. 35 eine geschnittene Seitenansicht der Anordnung gemäss Figur 34;
Fig. 36 eine Draufsicht der Anordnung gemäss Figur 34;
Fig. 37 eine perspektivische Ansicht der Anordnung gemäss Figur 34;
Fig. 38 eine Ansicht von unten eines sechsten Ausführungsbeispiels des erfindungsgemässen Geschiebes;
Fig. 39 eine Seitenansicht des Geschiebes gemäss Figur 38;
Fig. 40 eine perspektivische Ansicht des Geschiebes gemäss Figur 38 von oben;
Fig. 41 eine perspektivische Ansicht des Geschiebes gemäss Figur 38 von unten;
Fig. 42 die Ansicht gemäss Figur 40, wobei Matrize und Friktionsteil im Schnitt gezeigt sind;
Fig. 43 eine Draufsicht eines siebten Ausführungsbeispiels des erfindungsgemässen Geschiebes;
Fig. 44 eine Seitenansicht des Geschiebes gemäss Figur 43;
Fig. 45 eine perspektivische Ansicht des Geschiebes gemäss Figur 43;
Fig. 46 die Ansicht gemäss Figur 45, wobei Matrize und Friktionsteil im Schnitt gezeigt sind;
Fig. 47 eine Zahnkrone mit einer Patrize eines erfindungsgemässen Geschiebes; und
Fig. 48 eine Grundform der Patrize für softwaretechnische modellierung.

### Erstes Ausführungsbeispiel

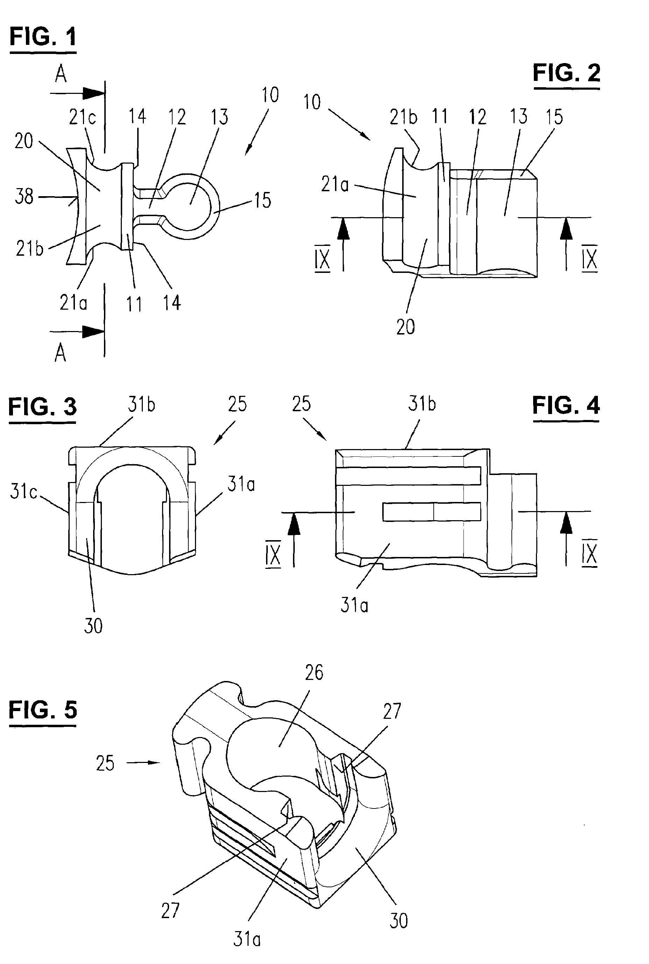

Wie aus den Figuren 1 und 2 ersichtlich, umfasst die Patrize 10 ein beispielsweise an einer Krone befestigbares (lötbares) Approximalteil 11, welches über einen Steg 12 mit einem Kopfteil 13 verbunden ist. Das Approximalteil 11 ist auf seinen beiden Längsseiten 21a und 21c jeweils mit einer Längsrille versehen, wobei die beiden Längsrillen sich in Einschubrichtung der Matrize erstrecken und zur Bildung einer okklusalen Auflagefläche auf der okklusal zugewandten Seite 21b miteinander verbunden sind. Dadurch ist eine Stabilisierungsrille 20 gebildet, welche sich von der einen Längsseite 21a des Approximalteils 11 über die obere, d.h. okklusale Seite 21b zur anderen Längsseite 21c des Approximalteils 11 erstreckt.

Die Stabilisierungsrille 20 hat in der Schnittebene, welche in Figur 1 durch die Linie A-A angegeben ist, einen im Wesentlichen U-förmigen Verlauf und weist einen runden Querschnitt auf, welcher vorzugsweise entlang der Stabilisierungsrille 20 im Wesentlichen gleich bleibt. Vorzugsweise ist der Querschnitt der Stabilisierungsrille 20 im Wesentlichen kreissegmentförmig, wobei die Bogenlänge kleiner als der halbe Kreisumfang ist. Die beidseitig des Stegs 12 sich befindenden ebenen Seiten des Approximalteils 11 bilden zusätzliche Anlageflächen 14 für die Matrize 25.

Das Kopfteil 13 ist im Wesentlichen zylindrisch, wobei Steg 12 und Kopfteil 13 auf der okklusalen Seite abgeschrägte Flächen 15 aufweisen. Wie Figur 1 zeigt, ist der Durchmesser des Kopfteils 13 sowie die Dicke des Stegs 12 kleiner als die Dicke des Approximalteils 11. Die Querschnittsfläche, welche das Approximalteil 11 in der Schnittebene A-A hat, ist somit grösser als eine Querschnittsfläche, welche parallel zur Ebene A-A durch den Steg 12 bzw. das Kopfteil 13 verläuft.

Figuren 3-5 zeigen die mit dem Zahnersatzteil zu verbindende Matrize 25. Diese ist als Gehäuse ausgebildet, welches auf der vorderen und unteren Seite offen ist. Die Matrize 25 weist eine Ausnehmung 26 auf, deren Form durch Flächen gegeben ist, welche im Wesentlichen komplementär zu den Flächen von Kopfteil 13, Steg 12, Anlageflächen 14 und Stabilisierungsrille 20 sind. Insbesondere umfasst die Matrize Anlageflächen 27 sowie am vorderen Ende eine Stabilisierungsrippe 30, welche sich von der einen Längsseite 31a der Matrize 25 über die okklusale Seite 31b zur anderen Längsseite 31c erstreckt.

Wie insbesondere Figur 3 zeigt, hat die Stabilisierungsrippe 30 - analog der Stabilisierungsrille 20 - einen U-förmigen Verlauf. Sind Patrize 10 und Matrize 25 zusammengefügt, so greift die Stabilisierungsrippe 30 in die Stabilisierungsrille 20, sodass eine formschlüssige Verbindung gebildet ist.

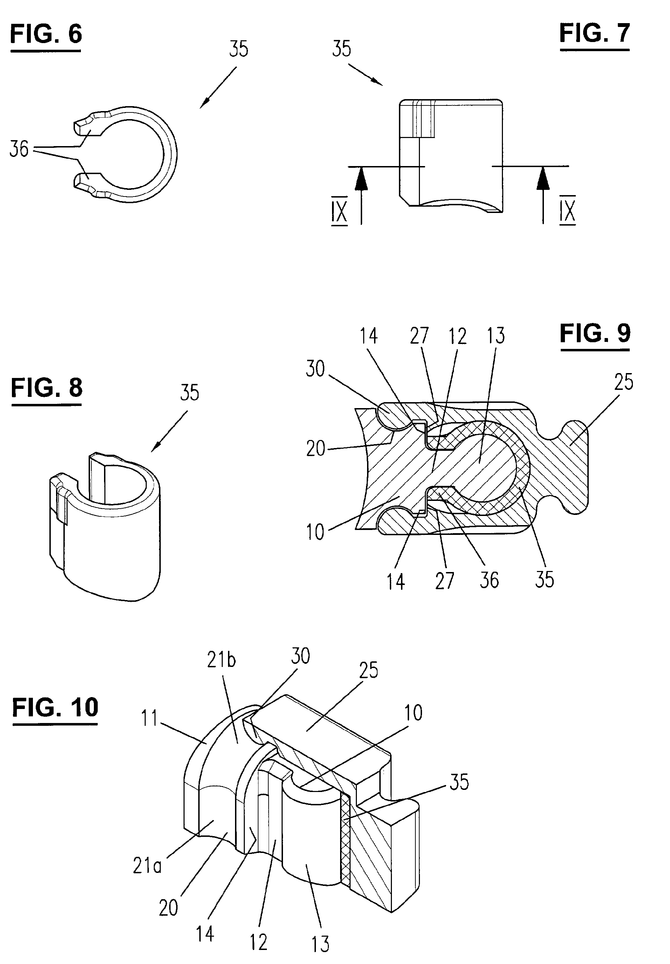

Wie aus Figuren 6-7 ersichtlich, ist das Friktionsteil 35 im Wesentlichen als seitlich offene Rohrhülse ausgebildet, welche Fortsätze 36 aufweist. Das Friktionsteil 35 ist aus Kunststoff und erlaubt es, Toleranzen beim Zusammenwirken von Patrize 10 und Matrize 25 auszugleichen. Bei Belastung des Geschiebes hat das Friktionsteil 35 ebenfalls eine dämpfende Wirkung. Im Weiteren kann durch entsprechende Wahl der Dicke des Friktionsteils 35 die Kraft eingestellt werden, die es braucht, um die Matrize 25 von der Patrize 10 zu trennen bzw. die Prothese auszugliedern. Diese Art der Aktivierung des Geschiebes ist z.B. aus der Patentschrift EP 0 659 063 B1 bekannt.

Wie aus Figuren 9 und 10 ersichtlich, greift die Matrize 25 beim zusammengesetzten Geschiebe mit ihrer Stabilisierungsrippe 30 in die Stabilisierungsrille 20 und die Anlageflächen 14 und 27 stehen sich gegenüber. Das Friktionsteil 35 umschliesst das Kopfteil 13 und liegt mit den Fortsätzen 36 am Steg 12 an.

Die Toleranzen der Dimensionen von Patrize 10 und Matrize 25 sind so gewählt, dass im unbelasteten Zustand die Matrize 25 auf der Stabilisierungsrille 20 abgestützt ist und nicht auf dem Steg 12 oder dem Kopfteil 13.

Das in den Figuren 1 und 2 gezeigte Approximalteil 11 der Patrize 10 ist mit einer konkaven Approximalfläche 38 versehen, welche mittels Lötung z.B. mit der Krone verbindbar ist.

### Zweites und drittes Ausführungsbeispiel

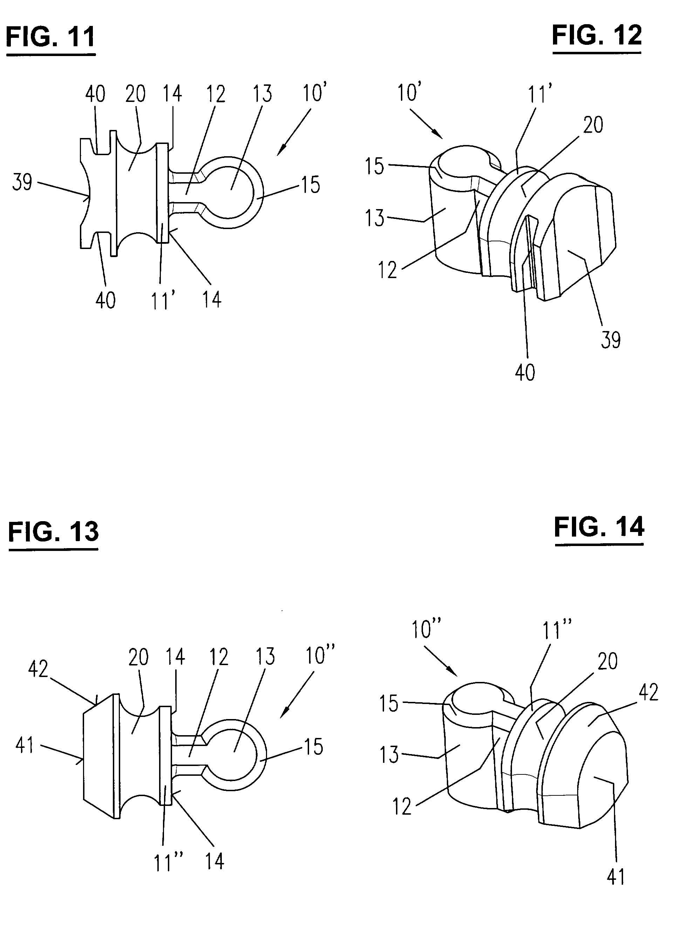

Figuren 11 und 12 sowie 13 und 14 zeigen zwei weitere Varianten von Patrizen 10' und 10'', welche mittels Anguss bzw. Laserung z.B. mit der Krone verbindbar sind. In den Figuren 11-14 sind Teile, welche den Teilen gemäss Figuren 1 und 2 entsprechen, mit denselben Bezugszeichen versehen. Zur Bildung eines Geschiebes sind die Patrizen 10' und 10'' zusammen mit der Matrize 25 sowie dem Friktionsteil 35 einsetzbar.

Wie aus den Figuren 11 und 12 ersichtlich, weist das Approximalteil 11' der angiessbaren Patrize 10' endseitig eine konkave Approximalfläche 39 mit zwei Längsnuten 40 auf.

Wie aus den Figuren 13 und 14 ersichtlich, umfasst das Approximalteil 11'' der mittels Laserung verbindbaren Patrize 10'' endseitig eine ebene Approximalfläche 41, welche an eine abgeschrägte, im Wesentlichen U-förmige Randfläche 42 angrenzt.

### Viertes Ausführungsbeispiel

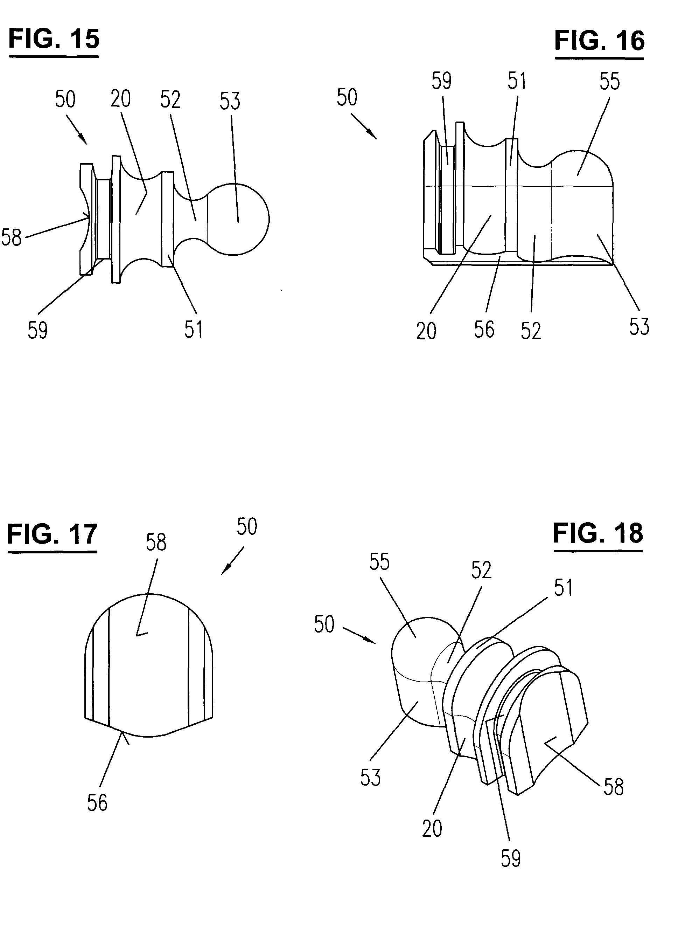

In den Figuren 15-29 ist ein weiteres Ausführungsbeispiel des erfindungsgemässen Geschiebes dargestellt. Die in den Figuren 15-18 dargestellte Patrize 50 unterscheidet sich von der Patrize 10' im Wesentlichen darin, dass der okklusale Bereich 55 des Kopfteils 53 sowie der Steg 52 runde Aussenflächen haben. Kopfteil 53 und Steg 52 haben im unteren, d.h. basalen Bereich der Patrize 50 einen omegaförmigen Querschnitt. Der okklusale Bereich 55 des Kopfteils 53 weist eine im Wesentlichen sphärische Form auf.

Der Steg 52 ist als Nut mit rundem Querschnitt ausgebildet, welche sich im Wesentlichen U-förmig von der einen Längsseite des Stegs 52 über die okklusale Seite zur anderen Längsseite des Stegs 52 erstreckt. Nebst einer runden Ausführung von Stabilisierungsrille 20 und -rippe 30 wird durch die runde Formgebung von Steg 52 und Kopfteil 53 im okklusalen Bereich die Eingliederung der Prothese zusätzlich erleichtert. Im Weiteren ist die Gefahr einer Beschädigung des Friktionsteils 75 aufgrund der runden Formgebung von Steg 52 und Kopfteil 53 verringert.

Wie aus der Figur 17 ersichtlich, sind die untersten Flächen 56 der Patrize 50 abgeschrägt ausgebildet, sodass diese zur Mitte der Patrize 50 hin unter einem stumpfen Winkel zulaufen. Ist die Patrize 50 im Mund befestigt, so erleichtern die abgeschrägten Flächen 56 eine Reinigung z.B. mittels Zahnseide.

Das Approximalteil 51 mit der Stabilisierungsrille 20 ist ähnlich gestaltet wie bei der Patrize 10'. Insbesondere ist, wie aus Figur 15 ersichtlich, der Durchmesser des Kopfteils 53 und die Dicke des Stegs 52 kleiner als die Dicke des Approximalteils 51, sodass der Querschnitt im Bereich der Stabilisierungsrille 20 grösser ist als im Bereich von Steg 52 und Kopfteil 53.

Die Patrize 50 ist zur Befestigung mittels Anguss ausgelegt. Zu diesem Zweck weist das Approximalteil 51 endseitig eine U-förmige Angussnut 59 und eine konkave Approximalfläche 58 auf. Die Angussnut 59 erstreckt sich von der einen Längsseite des Approximalteils 51 über die okklusale Seite zur anderen Längsseite des Approximalteils 51. Die Angussnut 59 hat gegenüber dem Ausführungsbeispiel mit zwei Längsnuten 40, wie sie in den Figuren 11 und 12 gezeigt ist, den Vorteil, dass die Angussfläche von den übrigen Flächen des Approximalteils 51 klarer abgegrenzt ist und somit ein präziserer Anguss ermöglicht wird. Auch ist mit einer über die okklusale Seite geführten Angussnut 58 ein ästhetisch verbessertes Resultat erzielbar.

Natürlich kann je nach der gewünschten Befestigungsart der Patrize 50 das Approximalteil 51 endseitig so ausgebildet sein wie in der Figur 1, 12 oder 14 gezeigt.

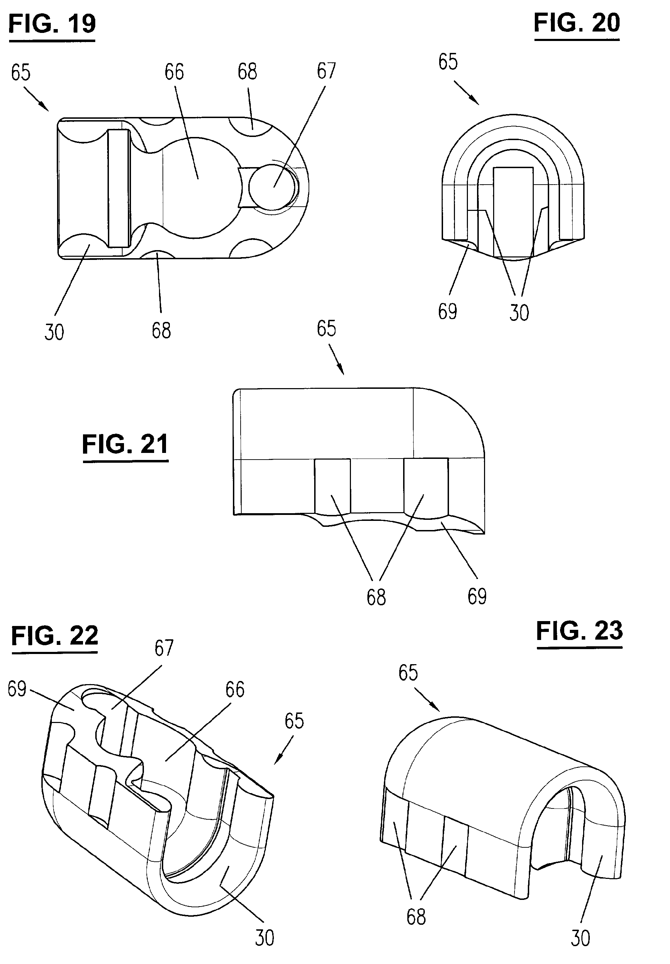

Die in den Figuren 19-23 gezeigte Matrize 65 ist als Gehäuse ausgebildet, welches auf der vorderen und unteren Seite offen ist. Die Matrize 65 weist eine Ausnehmung 66 auf, in welche Steg 52 und Kopfteil 53 sowie das Friktionsteil 75 aufgenommen werden kann. Angrenzend an die Ausnehmung 66 weist die Matrize 65 eine im Wesentlichen zylindrische Ausnehmung 67 auf, welche zur Aufnahme einer Friktionsschraube 74 dient. Am vorderen Ende ist die Matrize 65 mit einer Stabilisierungsrippe 30 versehen, welche sich von der einen Längsseite der Matrize 65 über die okklusale Seite zur anderen Längsseite erstreckt und welche in die Stabilisierungsrille 20 der Patrize 50 greifen kann.

Die Matrize 65 hat eine gerundete Aussenform, sodass sie gegenüber einer eckigen Ausführungsform weniger voluminös ist und somit weniger Platz in der Prothese benötigt. Im basalen Bereich ist die Aussenseite der Matrize 65 mit Vertiefungen 68 versehen, welche einen verbesserten Halt in der Zahnprothese gewährleisten und somit ein Herausreissen der Matrize 65 aus dem Prothesenkunststoff verhindern. Ähnlich wie bei der Patrize 50 sind die untersten Flächen 69 zur Mitte der Matrize 65 hin abgeschrägt.

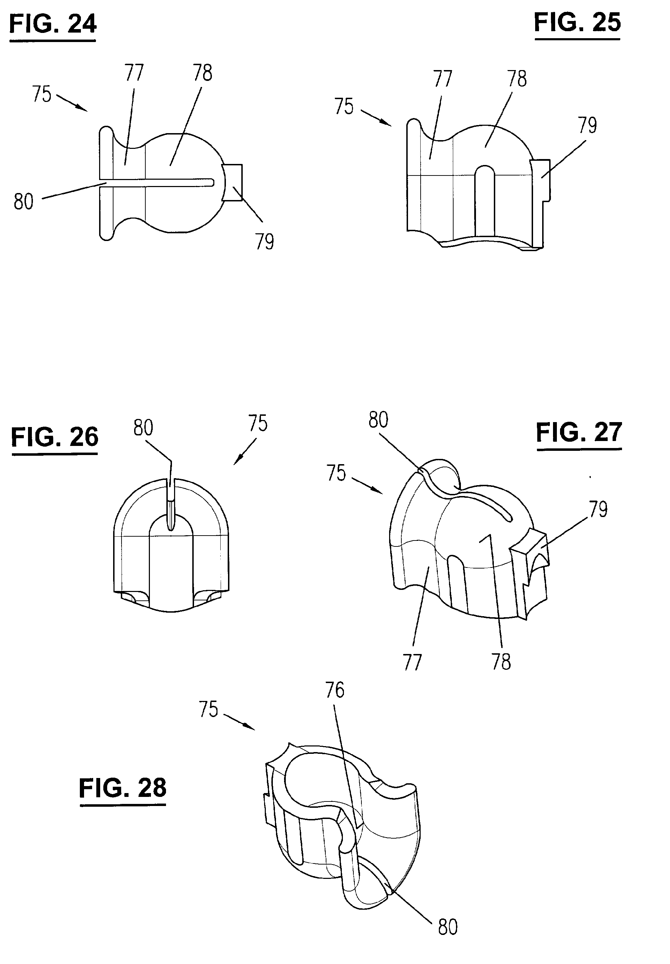

Figuren 24-28 zeigen verschiedene Ansichten des als Friktionsteil 75 dienenden Kunststoffeinsatzes. Dieses ist gehäuseartig ausgebildet, wobei die Innenflächen im Wesentlichen komplementär zu den Aussenflächen von Kopfteil 53 und Steg 52 sind. Das Friktionsteil 75 umfasst demnach ebenfalls auf der oberen, d.h. okklusalen Seite eine Anlagefläche 76, welche beim zusammengesetzten Geschiebe auf der oberen Seite des Kopfteils 53 bzw. Stegs 52 aufliegt. Die Dicke des Friktionsteils 75 ist im Wesentlichen konstant. Die Aussenfläche des Friktionsteils 75 weist demnach - ähnlich wie das Kopfteil 53 und der Steg 52 - eine U-förmige Rille 77 sowie eine kugelförmige Kuppel 78 auf. Diese ist mit einem Vorsprung 79 versehen, auf welchen eine Friktionsschraube 74 einwirken kann. Der Vorsprung 79 kann auch konisch ausgeführt sein.

Das Friktionsteil 75 weist mindestens in der Mitte einen Längsschlitz 80 auf, wodurch es sich - je nach Einwirkung der Friktionsschraube 74 - aufweiten bzw. verengen kann und so einen entsprechenden Druck auf die Matrize 65 ausübt. Dadurch ist eine entsprechende Aktivierung des Geschiebes möglich. Das Friktionsteil 75 kann parallel zum Längsschlitz 80 mit zusätzlichen Schlitzen versehen sein. Als vereinfachte Variante des Friktionsteils ist es auch denkbar, dieses - analog den Figuren 6-8 - als Rohrhülse mit einem omegaförmigen Querschnitt auszubilden.

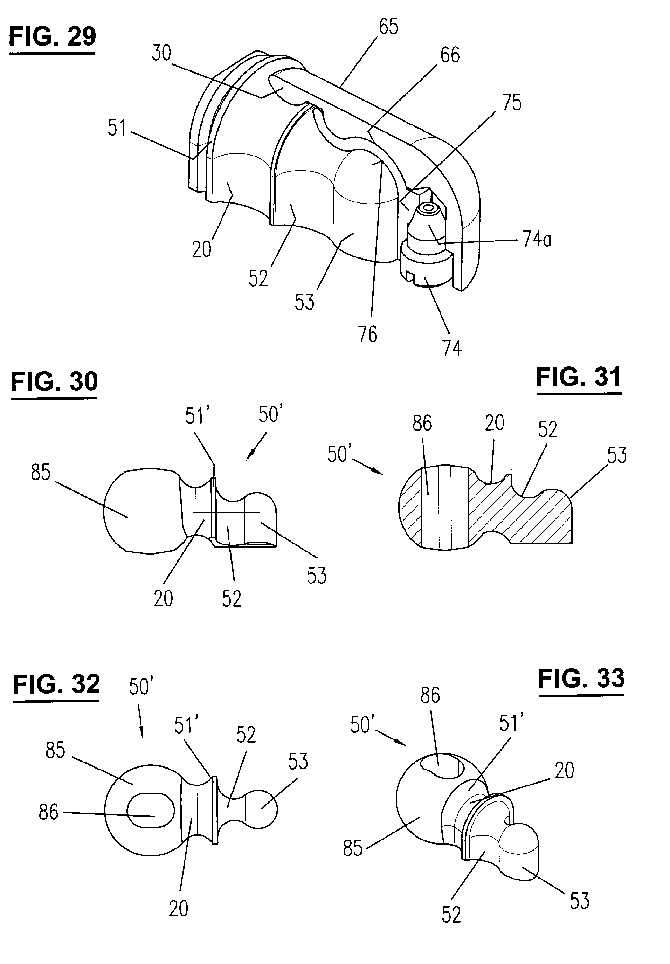

Figur 29 zeigt eine perspektivische Ansicht des zusammengesetzten Geschiebes, wobei Matrize 65 und Friktionsteil 75 im Schnitt dargestellt sind. Wie ersichtlich greift die Stabilisierungsrippe 30 in die Stabilisierungsrille 20. Die Friktionsschraube 74 ist von unten, d.h. der basalen Seite in die Ausnehmung 67 der Matrize 65 eingeführt. Die Friktionsschraube weist einen konischen Kopf 74a auf, sodass durch Hinein- bzw. Hinausdrehen die auf den Vorsprung 79 wirkende Kraft vergrössert bzw. verkleinert werden kann.

### Fünftes Ausführungsbeispiel

In den Figuren 30-33 ist ein weiteres Ausführungsbeispiel der Patrize 50' dargestellt. Kopfteil 53, Steg 52 und Stabilisierungsrille 20 entsprechen den jeweiligen Teilen der Patrize 50 im vierten Ausführungsbeispiel. Als Matrize sowie Friktionsteil ist die Matrize 65 sowie Friktionsteil 75 verwendbar.

Das Approximalteil 51' umfasst einen Rundkopf 85 mit einem Loch 86 zur Befestigung an einem Implantat 90. Der Rundkopf 85 hat eine kugelförmige Aussenfläche. Das Loch 86 ist als durchgehendes Langloch ausgebildet.

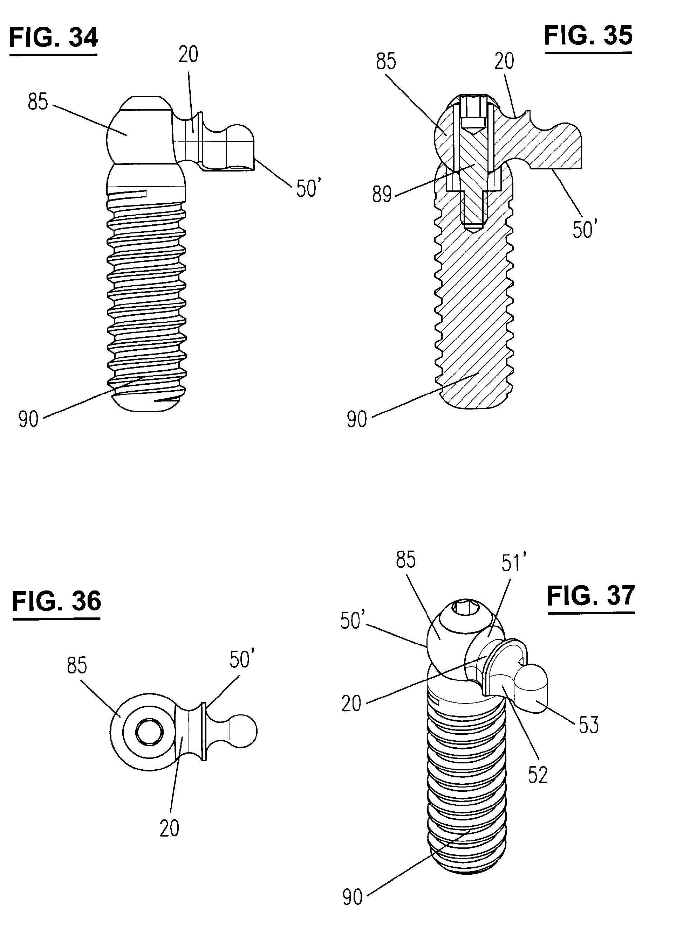

Figuren 34-37 zeigen die Patrize 50', welche mittels Schraube 89 am pfostenförmigen Implantat 90 befestigt ist. Das Langloch 86 bietet ein gewisses Spiel, sodass der Winkel zwischen Patrize 50' und Implantatachse in einem begrenzten Bereich einstellbar ist.

Es ist denkbar, weitere Teile am Implantat 90 zu montieren. Beispielsweise kann ein Steg montiert werden zur Bildung einer Haltevorrichtung mit Steg und Geschiebe, an welcher eine Freiendbrücke (sogenannte Extensionsbrücke) befestigbar ist. Mögliche Stegkonstruktionen sind beispielsweise in der internationalen Patentanmeldung WO 02/062257 A1 beschrieben.

### Sechstes Ausführungsbeispiel

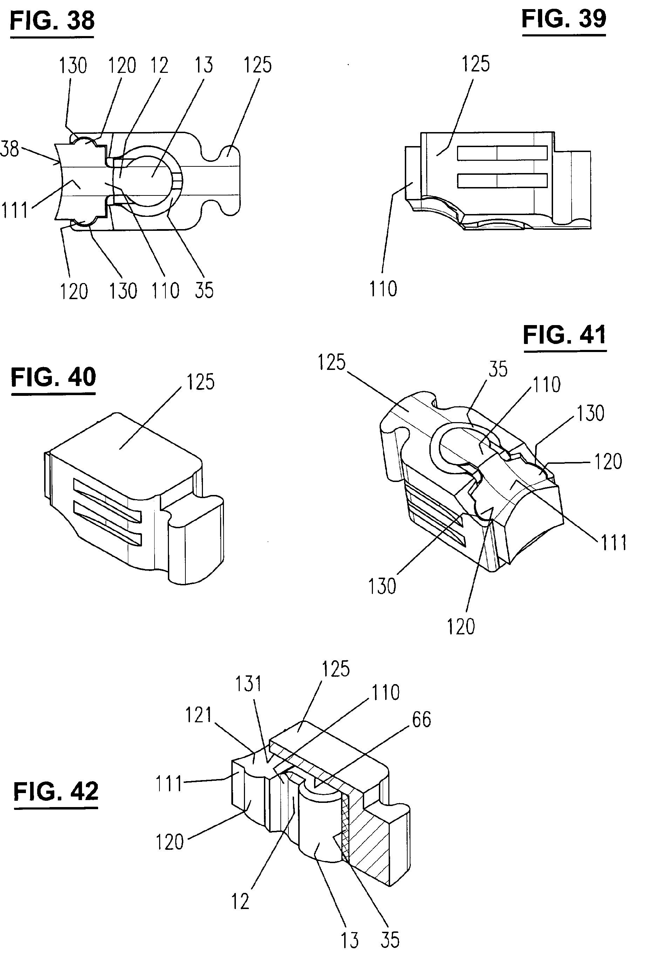

Das in den Figuren 38-42 gezeigte Ausführungsbeispiel unterscheidet sich vom ersten Ausführungsbeispiel im Wesentlichen darin, dass das Approximalteil 111 der Patrize sowie der entsprechende Bereich der Matrize 125 anders gestaltet ist. Teile, welche gleich wie in den Figuren 1-10 sind, sind mit denselben Bezugszeichen versehen. Wie insbesondere aus den Figuren 38 und 42 ersichtlich, umfasst das Approximalteil 111 an gegenüberliegenden Längsseiten jeweils eine Längsrippe 120, in welche eine entsprechende Längsrille 130 der Matrize 125 greift zur Bildung einer formschlüssigen Verbindung. Die Längsrippen 120 sowie Längsrillen 130 erstrecken sich in Einschubrichtung der Matrize 125 und weisen jeweils einen runden Querschnitt auf. Angrenzend zu den Längsrippen 120 umfasst das Approximalteil 111 auf der Oberseite eine okklusal zugewandte Auflagefläche 121, auf welcher die Matrize 125 mit einer Stützfläche 131 aufliegt. Auflagefläche 121 und Stützfläche 131 sind eben ausgebildet.

### Siebtes Ausführungsbeispiel

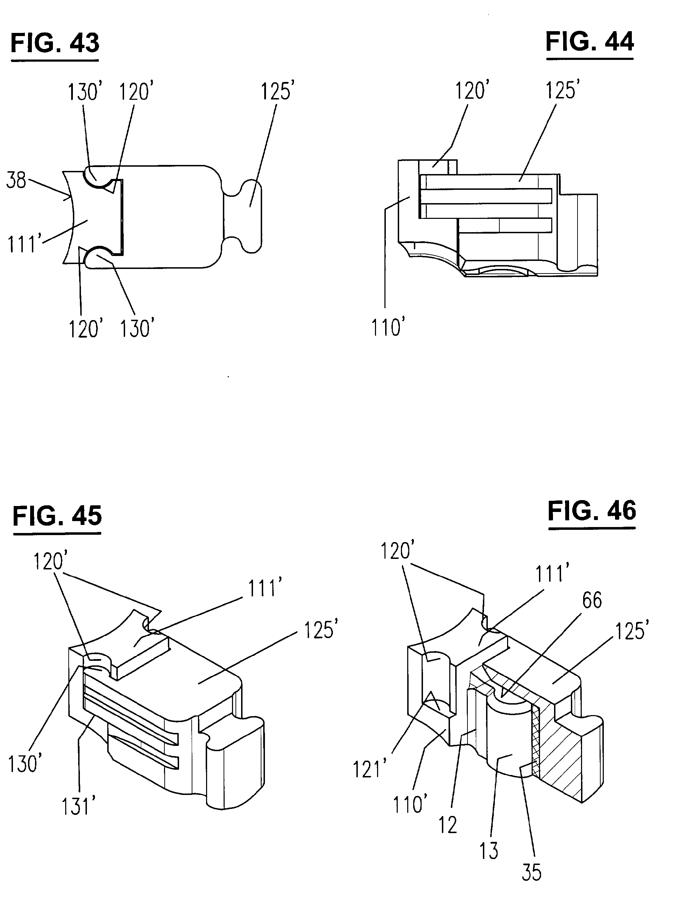

Das in den Figuren 43-46 gezeigte Ausführungsbeispiel unterscheidet sich vom ersten Ausführungsbeispiel im Wesentlichen darin, dass das Approximalteil 111' der Patrize 110' sowie der entsprechende Bereich der Matrize 125' anders gestaltet ist. Teile, welche gleich wie in den Figuren 1-10 sind, sind mit denselben Bezugszeichen versehen. Das Approximalteil 111' umfasst beidseitig jeweils eine Längsrille 120', welche vor dem unteren Ende des Approximalteils 111' endet. Dadurch ergibt sich jeweils eine Stufe, welche eine okklusal zugewandte Auflagefläche 121' bildet. Die Matrize 125' umfasst zwei Längsrippen 130', die formschlüssig in die entsprechende Längsrillen 120' greifen. Die Längsrillen 120' sowie Längsrippen 130' weisen jeweils einen runden Querschnitt auf. Die Unterseite der Längsrippen 130' bilden Stützflächen 131', welche auf der Auflagefläche 121' aufliegen. Auflagefläche 121' und Stützfläche 131' sind eben ausgebildet.

Die soweit dargestellten Geschiebe haben u.a. folgende Vorteile:
- Die Matrize ist mittels der Längsrippe/-rille sowie der okklusalen Stützfläche bzw. der durchgehenden Stabilisierungsrille/-rippe seitlich gehalten sowie okklusal gestützt, wodurch sich eine starre Verbindung ergibt, welche nebst bukkal/labial und lingual/palatinal auch auf der okklusalen Seite wirkt. Dadurch ist die Verbindung zwischen Patrize und Matrize verbessert, sodass insbesondere auch grosse Verdrehungskräfte zu keinen Relativbewegungen zwischen Patrize und Matrize führen. Insbesondere gewährleistet die okklusale Abstützung das Kippmomente aufgefangen werden können, welche versuchen, Matrize und Patrize gegeneinander zu kippen. Die verbesserte Verbindung zwischen Patrize und Matrize macht den Einsatz eines zusätzlichen Schubverteilungsarms unnötig, wie er z.B. aus der DE 196 19 786 A1 bekannt ist. Die Matrize ist so gestaltet, dass sie ebenfalls die Funktion eines Schubverteilungsarms übernimmt.
- Die Verbindung ist am Approximalteil angeordnet, d.h. an demjenigen Teil der Patrize, welcher die grössten Querschnitte aufweist. Die Matrize kann somit im Bereich der grössten Querschnitte der Patrize abgestützt werden, während die Belastung von Kopfteil und Steg reduziert ist. Der Verschleiss der Geschiebeteile ist dadurch verringert und die Bruchfestigkeit der Patrize erhöht. Die höhere Belastbarkeit des Geschiebes kommt auch dadurch zustande, dass die Matrize am Approximalteil und somit nahe bei der Zahnkrone bzw. dem Implantat abgestützt ist, sodass die Hebelwirkung auf die Patrize minimiert ist.
- Eine runde Ausführung der Längsrille/-rippe bzw. Stabilisierungsrille/-rippe erleichtert einerseits die Eingliederung der Prothese und gewährleistet anderseits, dass die Verbindung in der Herstellung einfacher und präziser reproduzierbar ist als beispielsweise die aus der DE 196 19 786 A1 bekannte Verbindung.

Patrize 10, 10', 10'', 50, 50', 110, 110' und Matrize 25, 65, 125, 125' können vorfabriziert sein, wozu sie aus einem mundbeständigem Material hergestellt sind. Beispiele von solchen Materialien sind: Titan, Metall wie Edelmetall, insbesondere selbsthärtende Edelmetalllegierung oder rostbeständiger Stahl, Keramik, Kunststoff oder glasfaserverstärkte Matrix. Es kann auch nur die Matrize 25, 65, 125, 125' vorfabriziert sein, während die Patrize 10, 10', 10'', 50, 50', 110, 110' aus einem ausbrennbaren Kunststoff gefertigt ist, sodass die im Mund verwendete Patrize durch Ausgiessen herstellbar ist.

Die Patrize 10, 10', 10'', 50, 50', 110, 110' ist auch für eine Herstellung mittels dentalem CAD/CAM-System ("Computer Aided Design/Computer Aided Manufacturing-System") geeignet. Insbesondere die Patrize 50 und 50' gemäss dem vierten und fünften Ausführungsbeispiel, welche runde Aussenflächen aufweisen, ist für eine derartige Herstellung geeignet.

Ein dentales CAD/CAM-System umfasst einen Scanner, mittels welchem die Geometrie des Zahnstumpfes bzw. der Zahnstümpfe oder andere Bereiche der Mundhöhle des Patienten erfassbar und entsprechende digitalisierte Daten erzeugbar sind, einen Computer mit Software ("CAD-Bereich"), mittels welchem anhand der eingescannten Daten das herzustellende Objekt softwaretechnisch modelliert werden kann, sowie eine durch den Computer gesteuerte Maschine ("CAM-Bereich"), welche anhand des Softwaremodells das Objekt anfertigt. Das Scannen kann direkt am Patienten oder an einem durch Abdrucknahme hergestellten Modell erfolgen. Verschiedene generative Fertigungsverfahren sind bekannt, welche bei der Maschine anwendbar sind. Beispiele geeigneter Fertigungsverfahren sind:
- spanabhebende Fertigungsverfahren wie Fräsen, Drehen und/oder Schleifen (Fertigung des Objekts aus einem Werkstückrohling durch Materialabtrag);
- Wachsdrucken (Aufbau des Objekts aus Thermoplast-Tropfen)
- Stereolithographie (Polymerisation einer flüssigen Phase mittels Laserstrahl);
- Sintern, insbesondere Lasersintern (Aufschmelzen und Erstarren eines Pulvers);
- galvanisches Schichten;
- 3D-Printing (Verfestigung eines Pulvers durch Binder).

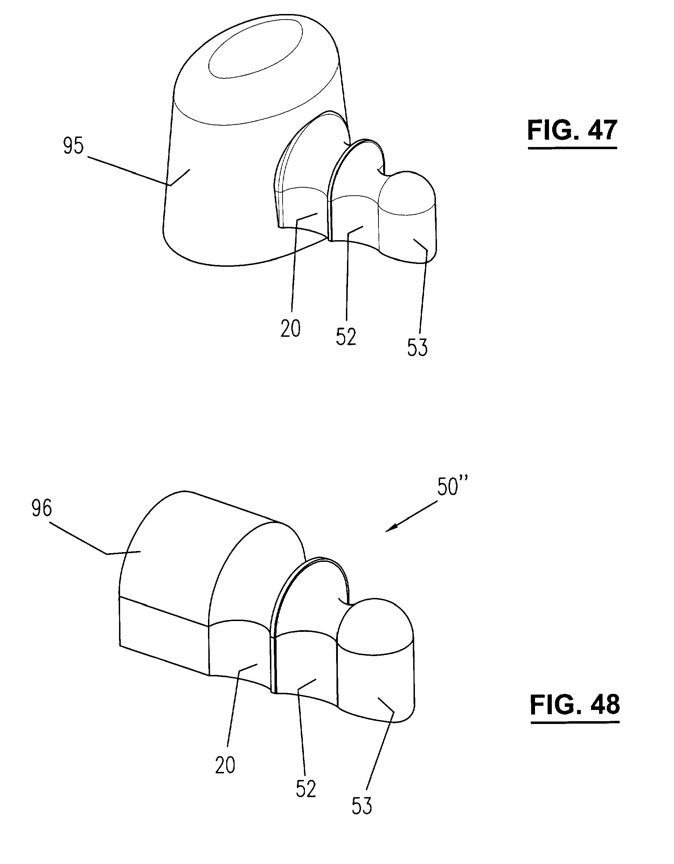

Vorteilhafterweise kann mittels des dentalen CAD/CAM-Systems die Patrize zusammen mit der Krone, Kronenkappe, Brücke oder dem Brückengerüst einstückig aus dem Ausgangsmaterial hergestellt werden. Figur 47 zeigt ein Beispiel eines einstückigen Teils mit Kronenkappe 95 und Patrize mit Kopfteil 53, Steg 52 und Stabilisierungsrille 20. Zur Bildung des Geschiebes kann idealerweise die Matrize 65 sowie das Friktionsteil - entweder als geschlossene Form 75 oder als omegaförmige Rohrhülse 35 - verwendet werden.

Entsprechend dem Fertigungsverfahren des CAD/CAM-Systems ist eine Fertigung z.B. in Keramik, Titan, Metall, Kunststoff oder einer glasfaserverstärkten Matrix möglich. Eine Herstellung in Keramik hat den Vorteil, dass dadurch ein Verschleiss der Patrize, wie er bei den bisher bekannten Patrizen beispielsweise durch Einlagerungen von Zahnstein und abrasiven Partikeln auftreten kann, praktisch unterbunden ist.

Um die Eingabe der Daten zu erleichtern, welche der herzustellenden Form entsprechen, sind in der Software-Bibliothek des dentalen CAD/CAM-Systems Daten der Patrize in einer Grundform 50'' gespeichert, wie sie in Figur 48 dargestellt ist. Die Grundform 50'' umfasst das Kopfteil 53, den Steg 52 sowie die Stabilisierungsrille 20, welche in der Form unverändert bleibt, sowie ein an die Stabilisierungsrille anschliessendes Positionierteil 96, welches softwaretechnisch positionierbar und/oder veränderbar ist. Beispielsweise wird zur Herstellung des Teils gemäss Figur 47 die Geometrie des Zahnstumpfes eingescannt, die Kronenkappe auf den eingescannten Zahnstumpf softwaretechnisch modelliert, die Grundform 50'' der Patrize gemäss Figur 48 aus der Software-Bibliothek geladen und der Positionierteil 96 softwaretechnisch so positioniert und gegebenenfalls modelliert, dass er in der richtigen Höhe über der Gingiva, im richtigen Winkel entlang des Kieferkamms und in der richtigen Einschubrichtung der Prothese zu liegen kommt. Der Computer erstellt dann aus dem softwaretechnischen Modell eine CAD-Datei zur Ansteuerung der Maschine, so dass diese die Patrize zusammen mit der Kronenkappe 65 einstückig anfertigt. Analog diesem Beispiel kann anstelle einer Kronenkappe auch eine Krone, Brücke oder ein Brückengerüst einstückig mit der Patrize hergestellt werden.

Die Grundform 50'' kann in einem gängigen, industriellen CAD-System bei Bedarf angepasst und individualisiert und schliesslich in die Softwarebibliothek des dentalen CAD/CAM-Systems übernommen werden.

Ausgehend von den hier beschriebenen Ausführungsbeispielen sind dem Fachmann zahlreiche Abwandlungen zugänglich, ohne den Schutzbereich der Erfindung zu verlassen, der durch die Ansprüche definiert ist.

Die Approximalfläche des Approximalteils 11 der Patrize 10 kann z.B. derart gestaltet sein, dass die Patrize am natürlichen Zahn oder Implantat anklebbar ist. Zusammen mit dieser Variante bilden die Patrizen 10, 10', 10'', 50, 50', 50'', 110 und 110' ein System von Patrizen, welches die heute wichtigsten Verbindungs- und Verarbeitungsarten abdeckt, namentlich: Ausgiessen einer ausbrennbaren Patrize, Angiessen, Anlöten, Anlasern oder Ankleben einer vorgefertigten Patrize, dentale CAD/CAM-Fertigung mit Krone, Kronenkappe, Brücke oder Brückengerüst, sowie die direkte verschraubung auf einem Implantat. Durch entsprechende, geometrische Auslegung kann idealerweise die Matrize 25, 65, 125 oder 125' gleichzeitig für alle Verarbeitungsvarianten eingesetzt werden.

Beim ersten Ausführungsbeispiel kann anstelle des Friktionsteils 35 auch ein schraubenaktivierbares Friktionsteil mit einem Vorsprung ähnlich dem Vorsprung 79 des Friktionsteils 75 verwendet werden. Beim vierten Ausführungsbeispiel ist es auch denkbar, den Vorsprung 79 des Friktionsteils 75, die Ausnehmung 67 in der Matrize 65 sowie die Friktionsschraube 74 wegzulassen und stattdessen eine Aktivierung des Geschiebes durch entsprechende Wahl der Dicke des Friktionsteil 75 zu erreichen. Zur Erzielung einer retentiven Haltekraft kann innen am Friktionsteil 35 oder 75 eine Erhebung vorgesehen sein, welche beim Aufsetzen in eine entsprechende Nut der Patrize einschnappt.

Es ist es auch möglich, einen Riegelmechanismus vorzusehen, um Matrize 25, 65, 125, 125' und Patrize 10, 10', 10'', 50, 50', 110, 110' riegelgesichert zu verbinden, oder eine Schraube vorzusehen, um die Geschiebeteile miteinander zu verschrauben. Die Form der Matrize 25, 65, 125, 125' kann so an die Patrize 10, 10', 10'', 50, 50', 110, 110' angepasst sein, dass kein Friktionsteil 35, 75 erforderlich ist.

Generell ist es denkbar, die Matrize 25, 65, 125 oder 125' so abzuwandeln, dass zusammen mit der Patrize 10, 10', 10'', 50, 50', 110, 110' unterschiedliche Verbindungsfunktionen erfüllt sind (frikativ, retentiv, verschraubt, verriegelt, gelenkig etc.) und beispielsweise ein System von Matrizen bilden.

Es ist auch denkbar, die Patrize 10, 10', 10'', 50, 50' mit einer Stabilisierungsrippe und die Matrize 25, 65 mit einer Stabilisierungsrille zu versehen und/oder Patrize 10, 10', 10'', 50, 50' sowie Matrize 25, 65 mit mehr als einer Stabilisierungsrille bzw. -rippe zu versehen, welche sich jeweils von der einen Längsseite okklusal zur anderen Längsseite erstreckt. Beim sechsten und siebten Ausführungsbeispiel ist es denkbar, die Längsrippen 120, 130' als Längsrillen und entsprechend die Längsrillen 130, 120' als Längsrippen auszubilden und/oder die Patrize 110, 110' sowie Matrize 125, 125' mit mehr als zwei Längsrillen bzw. -rippen zu versehen.

## Patentansprüche

1. Extrakoronales Geschiebe
mit einer mit dem Zahnersatzteil zu verbindenden Matrize (25, 65, 125, 125') und
mit einer am natürlichen Zahn oder Implantat (90) befestigbaren Patrize (10, 10', 10'', 50, 50', 110, 110'), welche ein Approximalteil (11, 11', 11'', 51, 51', 111, 111') umfasst,
**dadurch gekennzeichnet, dass**
das Approximalteil an zwei gegenüberliegenden Längsseiten jeweils mindestens eine Längsrille (20, 120') oder Längsrippe (120) umfasst, in welche eine entsprechende Längsrippe (30, 130') bzw. Längsrille (130) der Matrize greift zur Bildung einer formschlüssigen Verbindung, und mindestens eine okklusal zugewandte Auflagefläche (20, 121, 121'), auf welcher die Matrize mit einer Stützfläche (131, 131') aufliegt.

2. Geschiebe nach Anspruch 1, wobei die Auflagefläche der Patrize (10, 10', 10'', 50, 50') als Auflagerille oder Auflagerippe ausgebildet ist, welche zusammen mit den beiden Längsrillen bzw. Längsrippen der Patrize eine Stabilisierungsrille (20) bzw. Stabilisierungsrippe bildet, welche sich von der einen Längsseite (21a) des Approximalteils (11, 11', 11'', 51, 51') über die okklusale Seite (21b) des Approximalteils auf die andere Längsseite (21c) des Approximalteils erstreckt, und
die Stützfläche der Matrize als Stützrippe bzw. Stützrille ausgebildet ist, welche formschlüssig mit der Auflagerille bzw. Auflagerille verbunden ist und welche
vorzugsweise zusammen mit den beiden Längsrillen bzw. Längsrippen der Matrize (25, 65) eine Stabilisierungsrippe (30) bzw. Stabilisierungsrille bildet, welche
sich von der einen Längsseite (31a) der Matrize über die okklusale Seite (31b) der Matrize auf die andere Längsseite (31c) der Matrize erstreckt.

3. Geschiebe nach Anspruch 2, wobei die Stabilisierungsrille (20) sowie Stabilisierungsrippe (30) einen runden Querschnitt aufweisen, welcher vorzugsweise entlang der Stabilisierungsrille bzw. Stabilisierungsrippe im Wesentlichen gleich ist.

4. Geschiebe nach Anspruch 1, wobei die Längsrillen (120') der Patrize (110') bzw. der Matrize abgestuft ausgebildet sind zur Bildung der Auflagefläche (121') und/oder die Oberseite des Approximalteils (111) der Patrize (120) die Auflagefläche (121) bildet.

5. Geschiebe nach einem der Ansprüche 1 bis 4, wobei zwischen der Patrize (10, 10', 10'', 50, 50', 110, 100') und der Matrize (25, 65, 125, 125') ein Friktionsteil (35, 75) angeordnet ist, welches vorzugsweise auf der okklusalen Seite eine Anlagefläche (76) umfasst, welche auf der Patrize (50, 50') aufliegt.

6. Geschiebe nach einem der Ansprüche 1 bis 5, wobei die Matrize (25, 65, 125, 125') ein Gehäuse mit einer Ausnehmung (26, 66) zur Aufnahme eines Kopfteils (13, 53) der Patrize (10, 10', 10'', 50, 50', 110, 110') umfasst.

7. Geschiebe nach einem der Ansprüche 1 bis 6, wobei das Approximalteil (51') einen Rundkopf (85) umfasst mit mindestens einem Loch (86) zur Befestigung an einem Implantat (90).

8. Geschiebe nach einem der Ansprüche 1 bis 7, wobei
die Patrize (10, 10', 10'', 50, 50', 110, 110') aus ausbrennbarem Material ist, welches für den Ausguss geeignet ist, und/oder
das Approximalteil (11, 11', 11'', 51, 51') Approximalflächen (38-42) umfasst zur Befestigung der Patrize am Zahn oder Implantat mittels Angiessen, Anlöten, Anlasern, Kleben oder Schraubung.

9. Verfahren zur Herstellung eines Geschiebes nach einem der Ansprüche 1 bis 8, **dadurch gekennzeichnet, dass** die Patrize (10, 10', 10'', 50, 50', 110, 110') mittels dentalem CAD/CAM-System hergestellt wird.

10. Verfahren nach Anspruch 9, wobei mittels dem CAD/CAM-System die Patrize (10, 10', 10'', 50, 50', 110, 110') zusammen mit einer Krone, einer Kronenkappe (95), einer Brücke oder einem Brückengerüst einstückig hergestellt wird.
